# EUROPEAN PATENT SPECIFICATION

(11) **EP 3 160 810 B1**
(45) Date of publication and mention of the grant of the patent: **13.12.2017**
(21) Application number: 14738729.4
(22) Date of filing: 24.06.2014
(51) Int. Cl.: B60W 30/14

(54) **AN ARRANGEMENT AND METHOD FOR SUPPORTING A CRUISE CONTROL BRAKE IN A VEHICLE**
ANORDNUNG UND VERFAHREN ZUR UNTERSTÜTZUNG EINER FAHRGESCHWINDIGKEITSREGELBREMSE BEI EINEM FAHRZEUG
AGENCEMENT ET PROCÉDÉ PERMETTANT L'UTILISATION D'UN FREIN SUR RÉGULATEUR DE VITESSE DANS UN VÉHICULE

(43) Date of publication of application: 03.05.2017
(73) Proprietor: Volvo Truck Corporation, 405 08 Göteborg (SE)
(72) Inventor: KARLSSON, Lars, SE-417 29 Göteborg (SE); ERIKSSON, Anders, SE-423 49 Torslanda (SE)
(74) Representative: Volvo Technology Corporation
(86) International application number: PCT/EP2014/001715
(87) International publication number: WO 2015/197084

(56) References cited:
- WO-A1-96/40534
- WO-A1-2007/078230
- DE-A1-102008 043 777
- US-A1- 2010 088 001

## Description

### TECHNICAL FIELD

The present invention relates to an arrangement and a method for a brake cruise control system of a vehicle according to the preamble of claim 1. The invention further relates to a computer program adapted to perform such a method in a brake cruise control system when said program is run on a computer, and a computer program product comprising such program code means stored on a computer readable medium. The arrangement is suitable for heavy vehicles of different kinds having an auxiliary brake.

### BACKGROUND ART

Modern vehicles are often provided with a cruise control system in order to improve the comfort of a driver. Some systems are also provided with a brake cruise control function that will also brake the vehicle if a set brake cruise speed is exceeded. The cruise control system may further be adapted to maintain a set cruise speed by using only the accelerator, or by also using the brakes of the vehicle. This is especially common in heavy vehicles which are equipped with auxiliary brakes, such as engine brakes and retarders. A further function of the cruise control system of the vehicle may be an economy drive setting, in which the regulating parameters of the cruise control system are ruled by economy.

The cruise control system has a regulating range in which the actual speed value is maintained. In a normal cruise control system using only the accelerator to maintain the speed, an excessive speed of a few percent may be allowed. Typically, the speed may in this case vary between e.g. 69 to 71 km/h when the speed is set to 70 km/h. In such a cruise control system, it is not possible to set a maximal allowed excessive speed value for the vehicle. If the vehicle travels downhill, the vehicle will reach an excessive speed since the system does not use brakes to maintain the set speed.

When the cruise control system also uses the brake system to maintain a set speed of the vehicle, referred to as a brake cruise system, a specified excessive speed can also be allowed for a vehicle rolling down a fairly steep downhill slope. An allowed excessive speed may help to preserve energy by using the momentum of the vehicle. The limit for the allowed excessive speed should of course be set to a value that does not endanger other vehicles or that exceeds speed limits. When an excessive speed limit is set, this value will be used as the set brake cruise speed. The driver sets the brake cruise speed to a value that he estimates that the auxiliary brakes of the vehicle can maintain during a descent. If the auxiliary brakes cannot hold this set brake cruise speed, the driver must interact and brake the vehicle manually.

It is important that the set brake cruise speed is not exceeded when the vehicle travels downhill. The system compares the actual vehicle speed with the set cruise control speed, and applies the auxiliary brake when the actual vehicle speed equals the set brake cruise speed. Depending on the type or types of auxiliary brake/s available on the vehicle, the response time for the auxiliary brake may vary. The response time of an auxiliary brake is the time from the activation of the auxiliary brake until the auxiliary brake is fully applied and delivers the set brake power. A hydraulic retarder may e.g. have a relatively fast response time, i.e. between 1 to 2 seconds, but an exhaust brake may have a response time of up to 5 seconds and more.

It is thus possible that the speed of the vehicle reaches a speed that is higher than the set brake cruise speed when the vehicle travels downhill. In some cases, depending e.g. on the inclination of the slope, the weight of the vehicle and the type of auxiliary brake, the reached speed may be higher than allowed. In such a case, the auxiliary brake may not be powerful enough to lower the speed back to the set brake cruise speed. Such a situation is not comfortable for the driver.

When the driver has experienced such an overshoot in the vehicle speed, he may reduce the set brake cruise speed in order to avoid such experiences in the future. But with a lower set brake cruise speed, the speed gap between the set cruise control speed and the brake cruise speed is reduced, which in turn increases fuel consumption and reduces the average speed of the vehicle.

It is known to monitor the road conditions in advance by using for example a GPS system in connection with a road map, such that the conditions ahead are known. In such a system, it is possible to decide in advance that the auxiliary brake should be applied before the set cruise speed is reached, in order to compensate for the response time of the auxiliary brake. However, all vehicles are not equipped with such a system.

US 2006/279137 describes a brake system in which an auxiliary brake is used as a primary brake and where a service brake may be used as a complement, when the brake power of the auxiliary brake is not enough. The system calculates how the vehicle will be driven in advance, such that suitable parameters of the vehicle can be selected.

US 2006/100768 describes a system in which the service brakes of a vehicle can be used as a complement to an auxiliary brake when a predefined setpoint speed is exceeded.

US 2006/113833 describes a system in which a service brake can be used as a complement brake to an auxiliary brake when the braking power of the auxiliary brake is reduced due to a decreased speed of the vehicle.

US 2012/283928 describes a vehicle control system in which the set brake cruise speed is adjusted by a control unit in dependency of different vehicle parameters, in order to take account of the delay in activation of an auxiliary brake and/or for comfort reasons.

These systems may work well in some situations, but there is still room for an improved cruise control system that can improve fuel efficiency and driver comfort.

DE102008043777A1 discusses the problem of wheel brakes becoming overheated when not assisted by an engine brake during downhill travel, and suggests automatically changing the gearbox setting to increase the engine braking to avoid wheel brake overheating.

### DISCLOSURE OF INVENTION

An object of the invention is therefore to provide an improved cruise control arrangement for a vehicle, with an improved activation of an auxiliary brake. A further object of the invention is to provide an improved method for activating an auxiliary brake in a cruise control system of a vehicle.

The solution to the problem according to the invention is described in the characterizing part of claim 1 for the arrangement and in claim 8 for the method. The other claims contain advantageous further developments of the inventive arrangement and method. In the cruise control arragement of claim 1, the arrangement will improve the response of the auxiliary brake in a brake cruise control, by compensating the activation time of the auxiliary brake with the service brake. When the brake cruise control function reaches the set brake cruise speed and activates the auxiliary brake, the service brake is activated at the same time. Since the response of the service brake is instant, there is no delay in the brake response. An auxiliary brake may have a response time of several seconds depending on the type of auxiliary brake. A hydraulic retarder normally have a relatively short response time in the range of a few seconds, and an exhaust brake normally have a response time of up to 5 seconds or more, depending on the required brake power. The response time is measured from the activation of the auxiliary brake until the auxiliary brake is fully applied and delivers the requested brake power.

By applying the service brake simultaneously with the auxiliary brake, the acceleration of the vehicle can be reduced instantaneously which means that there will not be an overshoot in vehicle speed of the vehicle. The speed of the vehicle can thus be held at the set brake cruise speed until the auxiliary brake is fully applied.

In an advantageous development of the inventive arrangement, the service brake is deactivated when the auxiliary brake is fully applied. In this way, the wear of the service brake is minimized. Further, the service brake will not heat up very much which means that the service brake is fresh and can be used to decrease the speed of the vehicle further if conditions changes, e.g. if a new speed limit appears in the middle of the downhill slope.

In an advantageous development of the inventive arrangement, the arrangement is adapted to perform a downshift of the transmission. In this way, the engine speed will increase which in turn will increase the available brake power of the auxiliary brake. However, a downshift will increase the time until the auxiliary brake is fully applied, since the time for the downshift will be added to the response time of the auxiliary brake. By using the service brake to hold the speed at the set brake cruise speed, it can be ensured that there will not be an overshoot in vehicle speed during the time of the downshift.

In an advantageous development of the inventive arrangement, the arrangement will only apply the service brake simultaneously with the auxiliary brake if a predefined vehicle condition is met. Such a predefined vehicle condition is preferably one of the following; the inclination of the downhill slope, the vehicle weight, the vehicle speed or the vehicle acceleration. In this way, the wear of the service brake can be further minimized, since the use of the service brakes is reduced. For example, if the auxiliary brake is applied at a horizontal road, there is no need to apply the service brake simultaneously with the auxiliary brake since there is no risk of an overshoot in vehicle speed. The same applies if the speed of the vehicle is very low, e.g. below 50 km/h. It is also unnecessary to apply the service brake if the acceleration of the vehicle is low or if the weight of the vehicle is low, e.g. if the vehicle is empty. In those cases, the overshoot in vehicle speed will at the most be very low.

With the inventive method, an optimized behaviour of the cruise control system of a vehicle can be obtained, in which an overshoot in vehicle speed is avoided. In this way, the fuel efficiency of the vehicle can be increased and the safety can be increased.

### BRIEF DESCRIPTION OF DRAWINGS

The invention will be described in greater detail in the following, with reference to the attached drawings, in which
- Fig. 1: shows a schematic view of a cruise control arrangement of a vehicle, and
- Fig. 2: shows a schematic flow chart of an inventive method for supporting a cruise control system of a vehicle.

### MODES FOR CARRYING OUT THE INVENTION

The embodiments of the invention with further developments described in the following are to be regarded only as examples and are in no way to limit the scope of the protection provided by the patent claims. The arrangement is suitable for all kinds of vehicles, but is especially suitable for heavy vehicles such as trucks and busses, having brake cruise control functionality using auxiliary brakes.

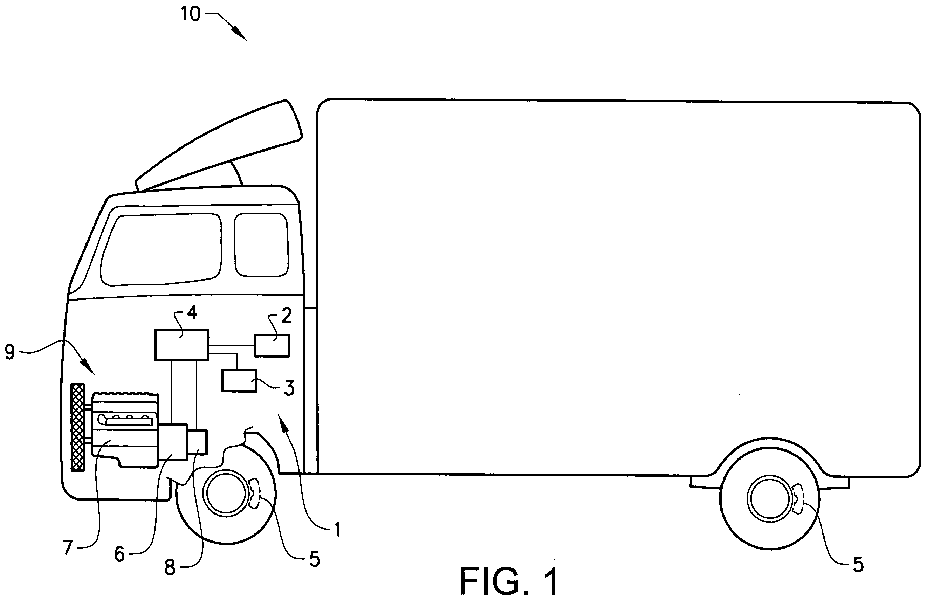

Figure 1 shows a schematic cruise control arrangement of a vehicle. The arrangement 1 comprises a cruise control electronic control unit 4 which may be either a standalone control unit comprising the cruise control system or may be integrated e.g. as a software module in another electronic control unit in the vehicle. The cruise control arrangement further comprises a user interface 2. The user interface comprises buttons used by a driver to input cruise control parameters and to engage and disengage the cruise control system. The user interface may further comprise display means showing part of or all selected cruise control parameters.

In this example, the vehicle 10 is powered by an engine 7 with a gearbox 6, preferably an automated manual transmission or an automatic transmission. The engine is provided with an exhaust brake 9 and the transmission is provided with a hydraulic retarder 8. The vehicle is further provided with a service brake 5 which is controlled by a brake control unit 3.

In the arrangement, a cruise speed can be set or selected, which is the reference speed that the vehicle will maintain when the cruise control is engaged and the vehicle travels on a horizontal road. The cruise control system is provided with a preset speed interval around the set cruise speed, e.g. +- 1 km/h, in which the cruise speed will be held during cruise control regulation. When the vehicle travels on a substantially even road and the cruise speed is set to 70 km/h, the speed may vary between 69 km/h to 71 km/h.

The driver can also set a brake cruise speed value, which is the speed value that the brake cruise control will maintain when the vehicle is travelling downhill. The brake speed value is normally set as a positive speed offset value that is added to the set cruise speed. If the brake speed offset is set to 6 km/h, the resulting brake cruise speed would in this case be 76 km/h. This speed will be maintained by the auxiliary brakes of the vehicle when the vehicle travels down a descent and where the vehicle will be coasting faster than the cruise speed. By allowing an excessive speed when travelling downhill, the travel efficiency can be improved. At the same time, the excessive speed should not be allowed to be too high, such that the vehicle will not be able to stop or such that it will exceed speed limits for a longer time.

The arrangement further comprises a brake control unit 3, which is used to control the service brake and additional service brake functions, such as an automated brake system (ABS) or an electronic stability program (ESP).

The cruise control system is adapted to activate the auxiliary brake when the speed of the vehicle exceeds the set brake cruise speed. Due to the rolling resistance and the air drag of the vehicle, this situation will only occur when the vehicle is travelling downhill. When travelling along a horizontal road, the cruise control decreases the throttle before the brake cruise speed is reached. Preferably, all auxiliary brakes of the vehicle are engaged at the same time in order to increase the available brake power, but it is also possible to use only one auxiliary brake when the required brake power is relatively low.

In the inventive cruise control arrangement, the arrangement is adapted to activate the service brake at the same time as the auxiliary brake. The response time of the service brake is instant, such that there is no delay in the brake response. An auxiliary brake may have a response time of several seconds depending on the type of auxiliary brake. A hydraulic retarder normally have a relatively short response time, in the range of a few seconds, and an exhaust brake normally have a response time of up to 5 seconds or more, depending on the required brake power. The response time is measured from the activation of the auxiliary brake until the auxiliary brake is fully applied and delivers the requested brake power.

By applying the service brake simultaneously with the auxiliary brake, the acceleration of the vehicle can be reduced instantaneously which means that there will not be an overshoot in vehicle speed of the vehicle. When the speed of the vehicle reaches the set brake cruise speed when the vehicle travels downhill, the speed of the vehicle can thus be held at the set brake cruise speed until the auxiliary brake is fully applied. Normally, the speed of the vehicle will continue to increase somewhat when the set brake cruise speed is reached, since the vehicle will continue to accelerate during the response time of the auxiliary brake.

This acceleration during the response time of the auxiliary brake will lead to a vehicle speed that is higher than the set brake cruise speed. Depending on the inclination of the slope, the weight of the vehicle, the actual vehicle speed and the acceleration rate, this excessive speed is more or less severe. In most cases, the excessive speed will only result in an overshoot in the vehicle speed, where the speed is brought back to the set brake cruise speed when the auxiliary brake is fully applied. However, such a speed overshoot may be uncomfortable for the driver, which may feel that he has no control of the vehicle. In order to avoid such an overshoot in speed, the driver may set a lower brake cruise speed value in order to be on the safe side, which in turn will affect the fuel efficiency of the vehicle in a negative way.

In some cases, the auxiliary brake will not be able to bring the excessive vehicle speed back to the set brake cruise speed when it is fully engaged, since the excessive speed is too high. In such a case, the driver is forced to reduce the speed of the vehicle manually by applying the service brake. Such a situation may well be uncomfortable for the driver, and should be avoided if possible. Further, such a situation will wear the service brake unnecessarily. If the vehicle travels with an excessive speed for a longer time, e.g. 1 minute, the excessive speed may also be recorded by the tachograph, which may lead to a fine.

With the inventive arrangement, those situations can be avoided by activating the service brake at the same time as the auxiliary brake. The service brake will respond instantly, and will thus be able to reduce the acceleration of the vehicle and to hold the speed at the set brake cruise speed during the response time of the auxiliary brake. When the brake power of the auxiliary brake increases during the response time, the brake power of the service brake is decreased with the corresponding amount. In this way, the speed is held constant at the set brake cruise speed. When the auxiliary brake is fully applied such that it delivers the requested brake power, the service brake can be disengaged, and the auxiliary brake can continue to hold the vehicle speed at the set brake cruise speed.

It is of advantage to deactivate the service brake when the auxiliary brake is fully applied. In this way, the wear of the service brake is minimized. Further, the service brake will not heat up very much which means that the service brake is fresh and can be used to decrease the speed of the vehicle further if conditions changes, e.g. if a new speed limit appears in the middle of the downhill slope.

Depending on the actual speed and acceleration of the vehicle, the arrangement is adapted to perform a down shift of the transmission. In this way, the engine speed can be increased which in turn will increase the available brake power of an engine auxiliary brake. A downshift will also increase the available brake power of a hydraulic retarder, since the available brake power of a hydraulic retarder is dependent on the speed of the shaft to which the retarder is mounted. However, a down shift will increase the time until the auxiliary brake is fully applied, since the time for the down shift will be added to the response time of the auxiliary brake. By using the service brake to hold the speed at the set brake cruise speed during the downshift, it can be ensured that there will not be an overshoot in vehicle speed.

The arrangement may be set to only apply the service brake simultaneously with the auxiliary brake if a predefined vehicle condition is met. Such a predefined vehicle condition can be the inclination of the downhill slope, i.e. the inclination of the vehicle, which will affect the acceleration of the vehicle. Such a condition can also be dependent on the vehicle weight, the vehicle speed or the vehicle acceleration. Since the problem with an undesired overshoot in vehicle speed will only occur when the vehicle travels downhill a relatively steep slope, the wear of the service brake can be further minimized. If the auxiliary brakes are applied on a horizontal road or on a slight descend, there is no need to apply the service brakes simultaneously with the auxiliary brake since there is no risk of an overshoot in vehicle speed. The same applies if the speed of the vehicle is very low, e.g. below 50 km/h. It is also unnecessary to apply the service brakes if the acceleration of the vehicle is low or if the weight of the vehicle is low, e.g. if the vehicle is empty. In those cases, the overshoot in vehicle speed will at the most be very low.

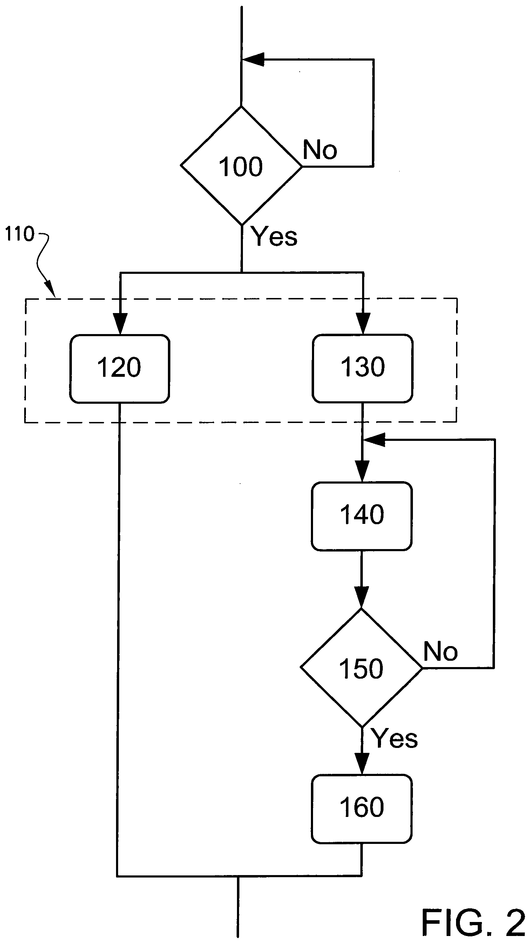

Fig. 2 shows a schematic flow chart of a method for supporting a cruise control function in a vehicle according to the invention. The method is adapted to activate a service brake at the same time as an auxiliary brake when the vehicle reaches a brake cruise speed, such that the service brake can compensate for the response time of the auxiliary brake.

In step 100, the cruise control function compares the actual vehicle speed with the set brake cruise speed. In step 110 an activation signal is sent to the control unit of the auxiliary brake and the control unit of the service brake, if the actual vehicle speed reaches the set brake cruise speed. The auxiliary brake is activated in step 120 and the service brake is activated in step 130. The auxiliary brake is activated by a preset amount which corresponds to a requested brake power. The service brake is activated such that the brake power of the service brake corresponds to the requested brake power of the auxiliary brake. The service brake will provide all the requested brake power at the activation time.

In step 140, the brake power of the service brake is decreased by an amount that corresponds to the increase in brake power of the auxiliary brake. In this way, the total brake power delivered by the service brake and the auxiliary brake will be same, which means that the vehicle will be able to keep a constant speed, i.e. to keep the set cruise speed. The decrease of brake power for the service brake may be controlled in different ways. One way is to use a predefined map including e.g. vehicle weight, road slope angle, vehicle speed, activation time for the auxiliary brake etc. which is used to control the service brake power. Another way is to control the service brakes such that the acceleration of the vehicle is zero, i.e. such that the speed of the vehicle does not increase. If the brake power of the auxiliary brake is sufficient to hold the set brake cruise speed when the auxiliary brake is fully applied, such a control will decrease the brake power to the service brake when the brake power of the auxiliary brake increases.

In step 150, the actual brake power of the auxiliary brake is compared with the requested brake power. When the auxiliary brake is fully applied, such that the auxiliary brake delivers the requested brake power, the service brake is deactivated in step 160.

It is further possible to perform a downshift of the transmission. This may be advantageous if it is decided that a higher brake power is required, since the available brake power from an auxiliary brake is dependent on the engine speed or the speed of the shaft where the auxiliary brake is mounted. The service brake will in this case be activated at the same time as the downshift is activated, such that the service brake can hold the speed of the vehicle at the set brake cruise speed during the downshift. When the downshift is completed, the brake power of the service brake is reduced when the brake power of the auxiliary brake increases.

It is possible to activate the service brake only when a predefined vehicle condition is met. Such a predefined vehicle condition can be the inclination of the downhill slope, the vehicle weight, the vehicle speed or the vehicle acceleration as described above.

The invention is not to be regarded as being limited to the embodiments described above, a number of additional variants and modifications being possible within the scope of the subsequent patent claims.

## Claims

1. A cruise control arrangement (1) for a vehicle (10), where the cruise control arrangement is provided with a cruise control brake function (3), where the cruise control brake function is set to a brake cruise speed, **characterized in that** the cruise control arrangement is adapted to activate at least one auxiliary brake (8, 9) when the vehicle speed reaches the set brake cruise speed, the auxiliary brake being activated by a preset amount which corresponds to a requested brake power, a response time being a time from the activation of the auxiliary brake until the auxiliary brake is fully applied such that it delivers the requested brake power, and to apply at the same time as the auxiliary brake activation a service brake (5) of the vehicle to keep the speed of the vehicle at the set brake cruise speed, and further adapted to decrease the brake power of the service brake (5) at the same time as the brake power of the at least one auxiliary brake (8, 9) increases, such that the speed of the vehicle is kept at the set brake cruise speed, whereby when the brake power of the auxiliary brake increases during the response time, the brake power of the service brake is decreased with the corresponding amount.

2. Arrangement according to claim 1, **characterized in that** the service brake is deactivated when the at least one auxiliary brake is fully applied.

3. Arrangement according to claim 1 or 2, **characterized in that** the at least one auxiliary brake is a compression brake (9) or a hydraulic retarder brake (8).

4. Arrangement according to claim 3, **characterized in that** the cruise control arrangement is adapted to activate both the compression brake and the hydraulic brake simultaneously.

5. Arrangement according to any of claims 1 to 4, **characterized in that** the arrangement will only apply the service brake if a predefined vehicle condition is met.

6. Arrangement according to claim 5, **characterized in that** the predefined vehicle condition is at least one of; the inclination of the downhill slope, the vehicle weight, the vehicle speed or the vehicle acceleration.

7. Vehicle (10) comprising an arrangement according to any of the preceding claims.

8. A method for supporting a cruise control function in a vehicle when the vehicle is travelling downhill and when the cruise control function is active, where the cruise control function comprises a cruise control brake function which is set to a brake cruise speed, **characterized by** the following steps:
- activating at least one auxiliary brake when the vehicle speed reaches the set brake cruise speed, the auxiliary brake being activated by a preset amount which corresponds to a requested brake power, a response time being a time from the activation of the auxiliary brake until the auxiliary brake is fully applied such that it delivers the requested brake power,
- applying a service brake of the vehicle at the same time as the auxiliary brake activation in order to keep the speed of the vehicle at the set brake cruise speed,
- decreasing the brake power of the service brake at the same time as the brake power of the at least one auxiliary brake increases, such that the speed of the vehicle is kept at the set brake cruise speed, whereby when the brake power of the auxiliary brake increases during the response time, the brake power of the service brake is decreased with the corresponding amount.

9. Method according to claim 8, further comprising the following step:
- deactivating the service brake when the at least one auxiliary brake is fully operational.

10. Method according to claim 8 or 9, further comprising the following step:
- applying the service brake only if the acceleration of the vehicle is larger than a predetermined value.

11. Method according to any of claim 8 to 10, where the at least one auxiliary brake is a compression brake or a hydraulic retarder brake.

12. Method according to claim 11, where both the compression brake and the hydraulic brake are activated simultaneously.

13. Method according to any of claims 8 to 12, where the activation of an auxiliary brake comprises the step of performing a down shift of the transmission.

14. A computer program comprising program code means for performing all the steps of anyone of the claims 8 - 13 when said program is run on a computer.

15. A computer program product comprising program code means stored on a computer readable medium for performing all the steps of any one of the claims 8 - 13 when said program product is run on a computer.

## Patentansprüche

1. Geschwindigkeitsregelungsanordnung (1) für ein Fahrzeug (10), wobei die Geschwindigkeitsregelungsanordnung mit einer Geschwindigkeitsregelungsbremsfunktion (3) versehen ist, wobei die Geschwindigkeitsregelungsbremsfunktion auf eine Bremsfahrtgeschwindigkeit eingestellt ist, **dadurch gekennzeichnet**, dassdie Geschwindigkeitsregelungsanordnung daran angepasst ist, wenigstens eine Hilfsbremse (8, 9) zu aktivieren, wenn die Fahrzeuggeschwindigkeit die eingestellte Bremsfahrtgeschwindigkeit erreicht, wobei die Hilfsbremse durch einen voreingestellten Betrag aktiviert wird, der einer angeforderten Bremskraft entspricht, wobei eine Ansprechzeit eine Zeit von der Aktivierung der Hilfsbremse bis zur vollständigen Betätigung der Hilfsbremse ist, derart dass sie die angeforderte Bremskraft abgibt, und zur gleichen Zeit wie die Hilfsbremsenaktivierung eine Betriebsbremse (5) des Fahrzeugs zu betätigen, um die Geschwindigkeit des Fahrzeugs auf der eingestellten Bremsfahrtgeschwindigkeit zu halten, und ferner daran angepasst ist, die Bremskraft der Betriebsbremse (5) zur gleichen Zeit zu verringern, wenn die Bremskraft der wenigstens einen Hilfsbremse (8, 9) zunimmt, derart dass die Geschwindigkeit des Fahrzeugs auf der eingestellten Bremsfahrtgeschwindigkeit gehalten wird, wobei, wenn die Bremskraft der Hilfsbremse während der Ansprechzeit zunimmt, die Bremskraft der Betriebsbremse um den entsprechenden Betrag verringert wird.

2. Anordnung nach Anspruch 1, **dadurch gekennzeichnet**, dassdie Betriebsbremse deaktiviert wird, wenn die wenigstens eine Hilfsbremse vollständig betätigt ist.

3. Anordnung nach Anspruch 1 oder 2, **dadurch gekennzeichnet, dass** die wenigstens eine Hilfsbremse eine Kompressionsbremse (9) oder eine hydraulische Retarder-Bremse (8) ist.

4. Anordnung nach Anspruch 3, **dadurch gekennzeichnet, dass** die Geschwindigkeitsregelungsanordnung daran angepasst ist, sowohl die Kompressionsbremse (9) als auch die Hydraulikbremse gleichzeitig zu aktivieren.

5. Anordnung nach einem der Ansprüche 1 bis 4, **dadurch gekennzeichnet, dass** die Anordnung die Betriebsbremse nur dann betätigt, wenn eine vordefinierte Fahrzeugbedingung erfüllt ist.

6. Anordnung nach Anspruch 5, **dadurch gekennzeichnet, dass** die vordefinierte Fahrzeugbedingung die Neigung des Abhangs, das Fahrzeuggewicht, die Fahrzeuggeschwindigkeit und/oder die Fahrzeugbeschleunigung ist.

7. Fahrzeug (10) umfassend eine Anordnung nach einem der vorhergehenden Ansprüche.

8. Verfahren zum Unterstützen einer Geschwindigkeitsregelungsfunktion in einem Fahrzeug, wenn das Fahrzeug bergab fährt und wenn die Geschwindigkeitsregelungsfunktion aktiv ist, wobei die Geschwindigkeitsregelungsfunktion eine Geschwindigkeitsregelungsbremsfunktion umfasst, die auf eine Bremsfahrtgeschwindigkeit eingestellt ist, **gekennzeichnet durch** die folgenden Schritte:
- Aktivieren wenigstens einer Hilfsbremse, wenn die Fahrzeuggeschwindigkeit die eingestellte Bremsfahrtgeschwindigkeit erreicht, wobei die Hilfsbremse durch einen voreingestellten Betrag aktiviert wird, der einer angeforderten Bremskraft entspricht, wobei eine Ansprechzeit eine Zeit von der Aktivierung der Hilfsbremse bis zur vollständigen Betätigung der Hilfsbremse ist, derart dass sie die angeforderte Bremskraft abgibt,
- Betätigen einer Betriebsbremse des Fahrzeugs zur gleichen Zeit wie die Hilfsbremsenaktivierung, um die Geschwindigkeit des Fahrzeugs auf der eingestellten Bremsfahrtgeschwindigkeit zu halten,
- Verringern der Bremskraft der Betriebsbremse zur gleichen Zeit, wenn die Bremskraft der wenigstens einen Hilfsbremse zunimmt, derart dass die Geschwindigkeit des Fahrzeugs auf der eingestellten Bremsfahrtgeschwindigkeit gehalten wird, wobei, wenn die Bremskraft der Hilfsbremse während der Ansprechzeit zunimmt, die Bremskraft der Betriebsbremse um den entsprechenden Betrag verringert wird.

9. Verfahren nach Anspruch 8, ferner umfassend den folgenden Schritt:
- Deaktivieren der Betriebsbremse, wenn die wenigstens eine Hilfsbremse voll funktionsfähig ist.

10. Verfahren nach Anspruch 8 oder 9, ferner umfassend den folgenden Schritt:
- Betätigen der Betriebsbremse nur, wenn die Beschleunigung des Fahrzeugs höher als ein vorgegebener Wert ist.

11. Verfahren nach einem der Ansprüche 8 bis 10, wobei die wenigstens eine Hilfsbremse eine Kompressionsbremse oder eine hydraulische Retarder-Bremse ist.

12. Verfahren nach Anspruch 11, wobei sowohl die Kompressionsbremse als auch die Hydraulikbremse gleichzeitig aktiviert werden.

13. Verfahren nach einem der Ansprüche 8 bis 12, wobei die Aktivierung einer Hilfsbremse den Schritt des Durchführens eines Herunterschaltens des Getriebes umfasst.

14. Computerprogramm umfassend Programmcodemittel zum Durchführen aller Schritte nach einem der Ansprüche 8 - 13, wenn das Programm auf einem Computer läuft.

15. Computerprogrammprodukt umfassend Programmcodemittel, die auf einem computerlesbaren Medium gespeichert sind, zum Durchführen aller Schritte nach einem der Ansprüche 8 - 13, wenn das Programmprodukt auf einem Computer läuft.

## Revendications

1. Agencement régulateur de vitesse (1) pour un véhicule (10), où l'agencement régulateur de vitesse est pourvu d'une fonction de frein de régulateur de vitesse (3), où la fonction de frein de régulateur de vitesse est réglée à une vitesse de croisière de freinage, **caractérisé en ce que** l'agencement régulateur de vitesse est adapté pour activer au moins un frein auxiliaire (8, 9) lorsque la vitesse de véhicule atteint la vitesse de croisière de freinage réglée, le frein auxiliaire étant activé d'une quantité préréglée qui correspond à une force de freinage requise, un temps de réponse étant un temps écoulé depuis l'activation du frein auxiliaire jusqu'à ce que le frein auxiliaire soit complètement appliqué de sorte qu'il délivre la force de freinage requise, et pour appliquer en même temps que l'activation de frein auxiliaire un frein de service (5) du véhicule pour maintenir la vitesse du véhicule à la vitesse de croisière de freinage réglée, et en outre adapté pour diminuer la force de freinage du frein de service (5) en même temps que l'augmentation de la force de freinage de l'au moins un frein auxiliaire (8, 9), de sorte que la vitesse du véhicule soit maintenue à la vitesse de croisière de freinage réglée, moyennant quoi lorsque la force de freinage du frein auxiliaire augmente pendant le temps de réponse, la force de freinage du frein de service diminue de la quantité correspondante.

2. Agencement selon la revendication 1, **caractérisé en ce que** le frein de service est désactivé lorsque l'au moins un frein auxiliaire est complètement appliqué.

3. Agencement selon la revendication 1 ou 2, **caractérisé en ce que** l'au moins un frein auxiliaire est un frein sur échappement (9) ou un frein ralentisseur hydraulique (8).

4. Agencement selon la revendication 3, **caractérisé en ce que** l'agencement régulateur de vitesse est adapté pour activer le frein sur échappement et le frein ralentisseur hydraulique tous deux simultanément.

5. Agencement selon l'une des revendications 1 à 4, **caractérisé en ce que** l'arrangement n'appliquera le frein de service que si une condition de véhicule prédéfinie est remplie.

6. Agencement selon la revendication 5, **caractérisé en ce que** la condition de véhicule prédéfinie est au moins l'une parmi l'inclinaison de la pente descendante, le poids de véhicule, la vitesse de véhicule et l'accélération de véhicule.

7. Véhicule (10) comprenant un agencement selon l'une des revendications précédentes.

8. Procédé pour supporter une fonction de régulateur de vitesse dans un véhicule lorsque le véhicule se déplace en descente et lorsque la fonction de régulateur de vitesse est active, où la fonction de régulateur de vitesse comprend une fonction de frein de régulateur de vitesse qui est réglée à une vitesse de croisière de freinage, **caractérisé par** les étapes suivantes qui consistent :
- à activer au moins un frein auxiliaire lorsque la vitesse de véhicule atteint la vitesse de croisière de freinage réglée, le frein auxiliaire étant activé d'une quantité préréglée qui correspond à une force de freinage requise, un temps de réponse étant un temps écoulé depuis l'activation du frein auxiliaire jusqu'à ce que le frein auxiliaire soit complètement appliqué de sorte qu'il délivre la force de freinage requise,
- à appliquer un frein de service du véhicule en même temps que l'activation de frein auxiliaire afin de maintenir la vitesse du véhicule à la vitesse de croisière de freinage réglée,
- à diminuer la force de freinage du frein de service en même temps que l'augmentation de la force de freinage de l'au moins un frein auxiliaire, de sorte que la vitesse du véhicule soit maintenue à la vitesse de croisière de freinage réglée, moyennant quoi lorsque la force de freinage du frein auxiliaire augmente pendant le temps de réponse, la force de freinage du frein de service diminue de la quantité correspondante.

9. Procédé selon la revendication 8, comprenant en outre l'étape suivante qui consiste :
- à désactiver le frein de service lorsque l'au moins un frein auxiliaire est complètement fonctionnel.

10. Procédé selon la revendication 8 ou 9, comprenant en outre l'étape suivante qui consiste :
- à n'appliquer le frein de service que si l'accélération du véhicule est supérieure à une valeur prédéterminée.

11. Procédé selon l'une des revendications 8 à 10, où l'au moins un frein auxiliaire est un frein sur échappement ou un frein ralentisseur hydraulique.

12. Procédé selon la revendication 11, où le frein sur échappement et le frein hydraulique sont tous deux activés simultanément.

13. Procédé selon l'une des revendications 8 à 12, où l'activation d'un frein auxiliaire comprend l'étape qui consiste à réaliser une rétrogradation de la transmission.

14. Programme informatique comprenant un moyen de code de programme pour réaliser toutes les étapes de l'une quelconque des revendications 8 à 13 lorsque ledit programme est exécuté sur un ordinateur.

15. Produit de programme informatique comprenant un moyen de code de programme stocké sur un support lisible par ordinateur pour réaliser toutes les étapes de l'une quelconque des revendications 8 à 13 lorsque ledit produit de programme est exécuté sur un ordinateur.
